Europäisches Patentamt

European Patent Office

Office européen des brevets

(19)

(11) Publication number: **0 144 227**
**B1**

(12)   EUROPEAN PATENT SPECIFICATION

(45) Date of publication of patent specification: **26.10.88**   (51) Int. Cl.⁴: **A 01 D 34/70**

(21) Application number: **84308347.8**

(22) Date of filing: **30.11.84**

(54) Grass bag attachment for a combination lawn mower and tractor.

(30) Priority: **02.12.83 JP 186757/83**

(43) Date of publication of application:
**12.06.85 Bulletin 85/24**

(45) Publication of the grant of the patent:
**26.10.88 Bulletin 88/43**

(84) Designated Contracting States:
**DE FR GB**

(56) References cited:
**EP-A-0 072 572**
**DE-A-1 482 037**
**US-A-2 582 906**
**US-A-3 820 313**
**US-A-3 969 876**
**US-A-4 047 368**
**US-A-4 214 424**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Amano, Akira**
**1-18-30, Oyamadai**
**Shinagawa-ku Tokyo (JP)**
Inventor: **Sasaki, Kazuhiko**
**1-7-23, Higashi**
**Okegawa-shi Saitama (JP)**

(74) Representative: **Leale, Robin George et al**
**FRANK B. DEHN & CO. Imperial House 15-19 Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to grass container support means in a grass cutter vehicle according to the preamble of claim 1 such as a combination lawn mower and tractor or a riding lawn mower.

There are known lawn and garden tractors having an engine mounted at a front part of the tractor body, an operator's station or seat located at a rear part of such body, and a mower deck disposed below the tractor body. For example, U.S. Patent No. 4,393,645 discloses the preamble of claim 1. Such a mower and garden tractor has a bagger attachment in which a bracket or frame is mounted on a rear end of the tractor, and grass bag structures are supported from an upper portion of the bracket. The grass bag structures are covered with an openable top. Grass cuttings cut off by mower blades housed in the mower deck are discharged through a discharge duct into the said top, from which the grass cuttings are deposited in the grass bag structures. In this known bagger attachment, the two grass bag structures are supported by only one bracket or frame. Although the bagger attachment is simple in construction, its degree of rigidity is not high enough to provide adequate support for the two grass bag structures.

Accordingly the present invention is characterised in that said support means comprises a further mounting bracket laterally spaced from the first mounting bracket and said support post is of substantially inverted U-shape having a pair of upright portions and a cross portion connecting said upright portions, each said upright portion having a lower end adapted for releasable connection with a corresponding said mounting bracket, and each said hook member is disposed on a front central portion of a said grass container.

An embodiment of the invention will now be described by way of example and with reference to the accompanying drawings, in which:—

Fig. 1 is a fragmentary exploded perspective view of grass bag support means for use on a combination lawn mower and tractor, according to the present invention;

Fig. 2 is a fragmentary front elevational view of a grass bag for mounting on such support means;

Fig. 3 is a fragmentary perspective view of the grass bag when attached to a support post;

Figs. 4 and 5 are fragmentary side elevational and plan views of a rear portion of the combination lawn mower and tractor with grass bags attached; and

Fig. 6 is a perspective view of the combination lawn mower and tractor.

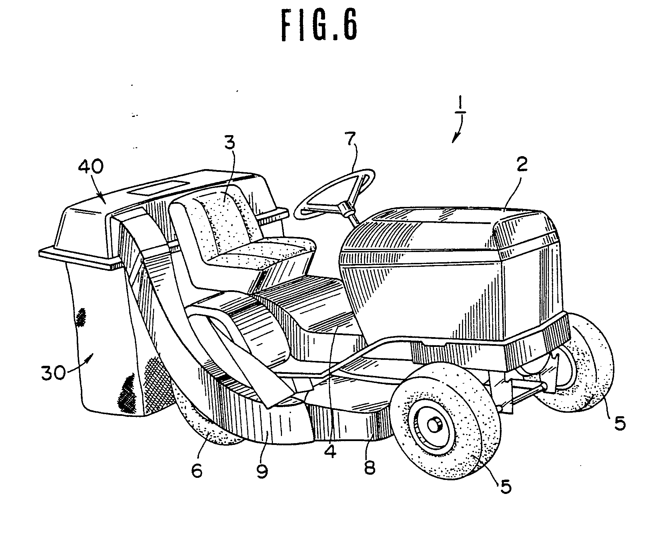

Fig. 6 illustrates a grass cutter vehicle in the form of a combinator lawn mower and tractor or a riding lawn mower 1. An engine (not shown) is mounted on a front portion of the tractor body and enclosed by an engine hood 2. An operator's station including a seat 3 is located at a rear portion of the tractor body, with a floor 4 extending forwardly from the seat 3. A pair of steerable front wheels 5 are rotatably mounted to the front portion of the tractor body, and a pair of rear drive wheels 6 are mounted to the rear portion thereof. A steering wheel 7 is rotatably mounted on the tractor body and operatively coupled to the front wheels 5.

A mower deck or grass cutter unit 8 is mounted on the tractor body and disposed below the floor 4. The mower deck 8 houses a number of mower blades mounted on a vertical shaft for rotation in a horizontal plane. The vertical shaft is rotated by a belt-and-pulley mechanism operatively connected to a mower output shaft of the engine. A grass discharge duct 9 is connected to one side of the mower deck 8 and extends alongside the tractor body to a position rearward of the tractor body.

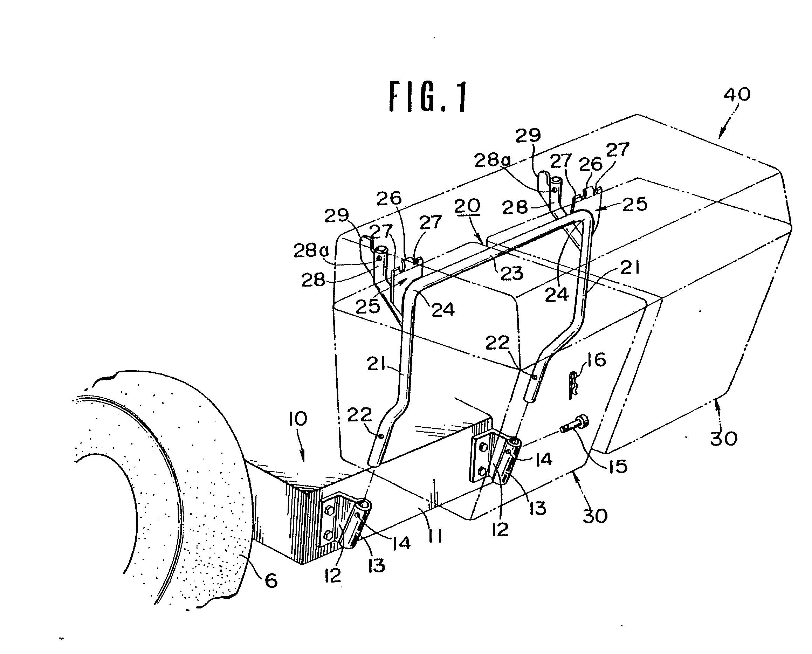

The combination lawn mower and tractor 1 includes a chassis 10 (Figs. 1, 4 and 5) having a rear end 11 to which a pair of laterally spaced brackets 12 are bolted. As shown in Fig. 1, each of the brackets 12 includes a tube 13 which is inclined rearwardly and upwardly and has a hole 14 extending transversely therethrough to receive a pin 15.

As seen in Fig. 1, a support post 20 comprises a bent pipe substantially in the shape of an inverted U as seen in front elevation. The support post 20 includes a pair of laterally spaced vertical portions 21 having lower portions inclined rearwardly and upwardly and having holes 22 extending transversely through lower end portions thereof to receive pins. The vertical portions 21 are joined together at their upper ends by a cross portion 23 including a pair of spaced shoulders 24 with a pair of support brackets 25 in the form of flat plates welded respectively to front surfaces of the shoulders 24. Each of the support brackets 25 projects upwardly beyond its associated shoulders 24 and has on its upper edge a central tongue 26 and a pair of spaced steps 27 positioned one on each side of the central tongue 26.

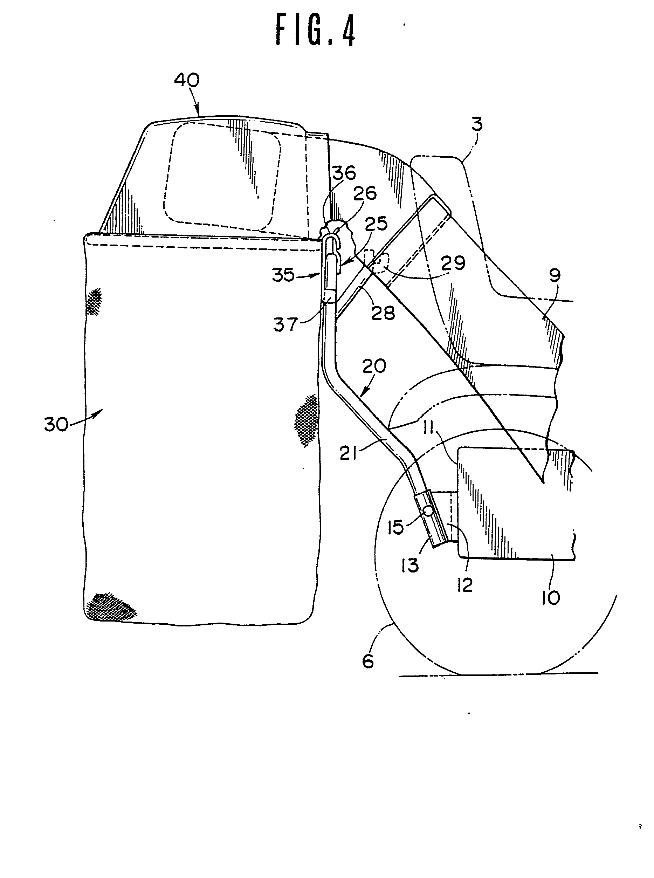

As better shown in Figs. 1 and 4, a pair of auxiliary pipes 28 are welded to the respective upper front surfaces of the vertical portions 21 of the support post 20 below the support brackets 25, such auxiliary pipes 28 extending upwardly and forwardly. The auxiliary pipes 28 have respective holes 28a extending laterally through the upper end portions thereof to receive pins. A pair of stops 29 are welded to the respective upper front surfaces of the auxiliary pipes 28 and project forwardly.

The support post 20 is detachably mounted on the rear end 11 of the chassis 10 by inserting the lower end portions of the vertical portions 21 thereof respectively into the tubes 13 of the brackets 12, inserting pins 15 laterally through the aligned pairs of holes 14, 22, and retaining the pins 15 in position against removal by means of split pins 16.

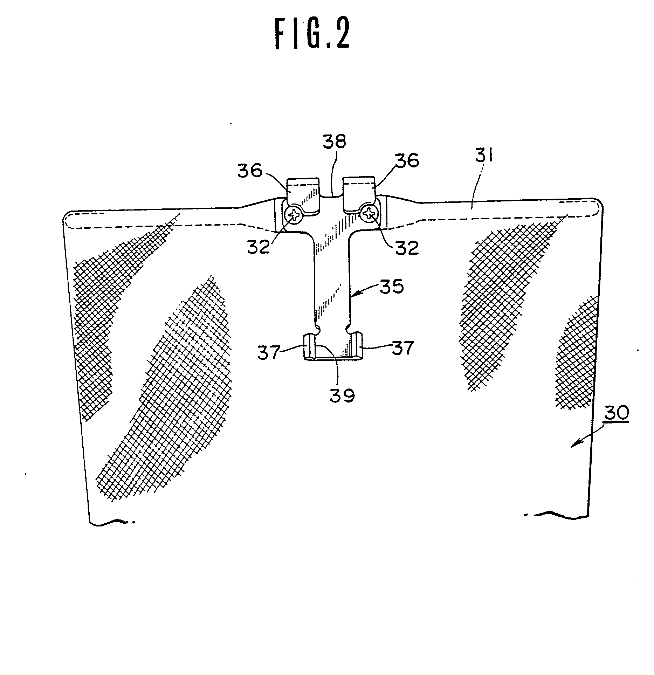

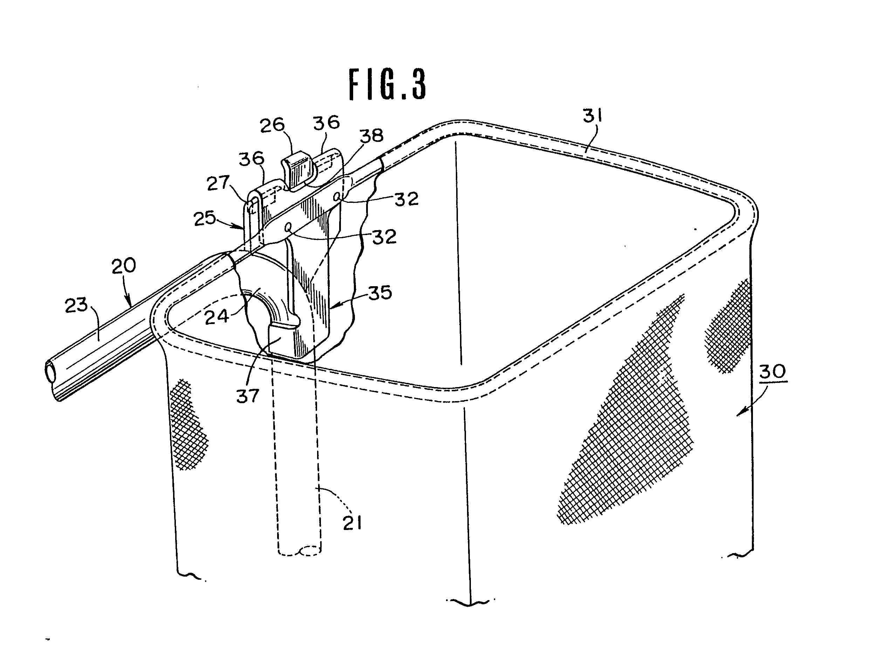

As illustrated in Figs. 2 and 3, a fabric grass bag 30 has a hook member 35 fixedly mounted centrally on an upper front edge thereof. More specifically, the grass bag 30 has an upper open frame 31 substantially in the form of a square as seen in plan, and the hook member 35 in the form of a substantially flat plate is fastened to the frame 31 by means of a pair of screws 32. The hook member 35 has a pair of laterally spaced hooks 36 on an upper edge thereof with a recess defined therebetween, the hooks 36 being directed forwardly. The hook member 35 also includes a pair of laterally spaced fingers 37 projecting from a lower portion thereof and defining a recess therebetween for fitting engagement with an upper portion of each of the vertical pipe portions 21. Two grass bags 30 of the above construction are supported on the support post 20.

To mount a grass bag 30 on the support post 20, the hooks 36 are engaged downwardly on the steps 24 of the support bracket 25, with the central tongue 26 positioned between the hooks 36, and then the fingers 37 are moved forwardly into fitting engagement with the upper portion of the vertical pipe portion 21, as shown in Fig. 3. The grass bag 30 is prevented from being laterally displaced out of its desired position, by the central tongue 26 and the fingers 37.

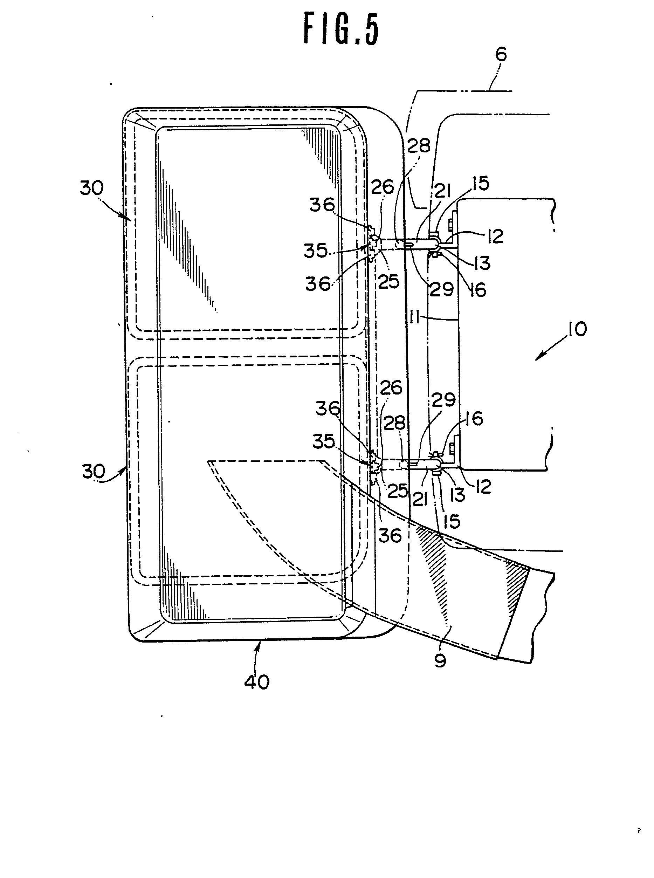

As shown in Figs. 4 and 5, a top cover 40 in the form of a downwardly open box is then hinged at its front edge to the auxiliary pipes 28 of the support post 20. More specifically, the top cover 40 has a pair of brackets (not shown) on its front side wall, and pins are inserted through the brackets and through the holes 28a in the auxiliary pipes 28. Thus, the top cover 40 is mounted in openable fashion on the grass bags 30 supported on the support post 20. The top cover 40 is prevented by the stops 29 from opening beyond a predetermined angular extent. The grass discharge duct 9 is connected to the front side wall of the top cover 40 near one side thereof and has its rear end projecting into the top cover 40 to discharging grass cuttings into the grass bags 30.

The grass bag attachment of the above described embodiment is advantageous, for the following reasons. The support post 20 of inverted U-shape is firmly attached to the chassis 10 through its two laterally spaced vertical portions 21. The support post 20 with the two grass bags 30 mounted on it is securely held in position against the wobbling or displacement, and hence the grass bags are supported in stable fashion. Since the support post 20 is secured to the brackets 12 by the pins 15, it can readily be attached or detached simply by inserting or removing the pins. The front central portions of the grass bags 30 are supported from the laterally spaced shoulders 24 at the upper portion of the support post 20. This arrangement allows the grass bags 30 to be kept in balance transversely, rather than being laterally tilted, even when a large quantity of grass cuttings has been collected in the grass box 30. The support post 20 thus firmly attached to the chassis 10 is also prevented from being tilted rearwardly or laterally due to the weight of grass cuttings in the grass bags 30.

## Claims

1. A grass cutter vehicle (1) having a chassis (10) provided with a grass container support means comprising: a first mounting bracket (12) on the rear end (11) of the chassis (10); a support post (20) adapted for releasable connection with said mounting bracket (12) on the chassis; a pair of laterally spaced support brackets (25) mounted on said support post (20), each said support bracket (25) comprising a substantially flat plate having a central tongue (26) projecting upwardly and a pair of steps (27) disposed one on each side of said central tongue (26); and a pair of grass containers (30), each having a hook member (35) adapted for engagement with a said support bracket (25) on said support post (20); characterised in that said support means comprises a further mounting bracket (12) laterally from the first spaced mounting bracket (12) and said support post (20) is of substantially inverted U-shape having a pair of upright portions (21) and a cross portion (23) connecting said upright portions (21), each said upright portion (21) having a lower end adapted for releasable connection with a corresponding said mounting bracket (12), and each said hook member (35) is disposed on a front central portion of a said grass container (30).

2. A vehicle according to claim 1, wherein each said grass container (30) includes a bag with a square frame (31) at the upper end thereof, and said hook member (35) is fastened to a laterally central portion of a front side portion of said frame (31).

3. A vehicle according to claim 1 or 2, wherein: said support post (20) has shoulders (24) at the upper ends of said upright portions (21); said support brackets (25) are mounted on the front side surfaces of said shoulders (24) of said support post (20); said central tongue (26) and said steps (27) of said support brackets (25) project upwardly beyond the associated shoulder (24) of said support post (20) and each said hook member (35) comprises a substantially flat plate having at its upper end a pair of hook portions (36) engageable with said steps (27) of said support bracket (25), a central recess (38) adapted for receiving said central tongue (26) of each support bracket (25), and at its lower portion a pair of fingers (37) defining a recess (39) therebetween to receive a said upright portion (21) of said support post (30).

4. A vehicle according to any one of claims 1 to 3, wherein each said mounting bracket (12) comprises an inclined tube (13) fixed to the rear end (11) of the chassis (10) and having a hole (14) for a pin (15), each said upright portion (21) of said support post (20) has a hole (22) for said pin in its lower end, and said pin is insertable through these holes (14, 22) for securing said support post (20) to the chassis (10).

## Patentansprüche

1. Grasschneidefahrzeug (1), aufweisend ein mit einer Grasbehälterhalterungseinrichtung versehenes Chassis (10), das umfaßt: eine erste Montagebefestigungseinrichtung (12) am rückwärtigen Ende (11) des Chassis (10); einen für eine lösbare Verbindung mit der Montagebefestigungseinrichtung (12) auf dem Chassis geeigneten Halterungsständer (12); ein Paar von seitlich mit Abstand angeordneten Halterungsbefestigungseinrichtungen (25), die auf dem Halterungsständer (20) angebracht sind, wobei jede Halterungsbefestigungseinrichtung (25) eine im wesentlichen flache Platte umfaßt, die eine nach oben vorspringende zentrale Zunge (26) und ein Paar von Stufen (27) aufweist, von denen jeweils eine auf jeder Seite der zentralen Zunge (26) angeordnet ist; und ein Paar von Grasbehältern (30), die jeweils ein für einen Eingriff mit einer Halterungsbefestigungseinrichtung (25) auf dem Halterungsständer (20) geeignetes Hakenelement (35) aufweisen; dadurch gekennzeichnet, daß die Halterungseinrichtung eine weitere Montagebefestigungseinrichtung (12) umfaßt, die seitlich mit Abstand von der ersten Montagebefestigungseinrichtung (12) angeordnet ist, und der Halterungsständer (20) im wesentlichen umgekehrte U-Form hat, wobei er ein Paar von stehenden Abschnitten (21) und einen die stehenden Abschnitte (21) verbindenden Querabschnitt (23) aufweist, wobei jeder stehende Abschnitt (21) ein für eine lösbare Verbindung mit einer entsprechenden Montagebefestigungseinrichtung (12) geeignetes unteres Ende aufweist, und jedes Hakenelement (35) auf einem zentralen Vorderabschnitt des Grasbehälters (30) angeordnet ist.

2. Fahrzeug nach Anspruch 1, bei dem der Grasbehälter (30) einen Sack mit einem quadratischen Rahmen (31) an dessen oberem Ende enthält und das Hakenelement (35) an einem seitlich zentralen Abschnitt des Vorderseitenabschnittes des Rahmens (31) befestigt ist.

3. Fahrzeug nach Anspruch 1 oder 2, bei dem der Halterungsständer (20) Schultern (24) an den oberen Enden der stehenden Abschnitte (21) aufweist; die Halterungsbefestigungseinrichtungen (25) an den Vorderseitenflächen der Schultern (24) des Halterungsständers (20) angebracht sind; die zentrale Zunge (26) und die Stufen (27) der Halterungsbefestigungseinrichtungen (25) über die zugeordnete Schulter (24) des Halterungsständers (20) hinaus vorspringen und jedes Hakenelement (35) eine im wesentlichen flache Platte umfaßt, die an ihrem oberen Ende ein Paar von mit den Stufen (27) der Halterungsbefestigungseinrichtung (25) in Eingriff bringbaren Abschnitten (36), eine zur Aufnahme der zentralen Zunge (26) einer jeden Halterungsbefestigungseinrichtung (25) geeignete zentrale Vertiefung (38) und an ihrem unteren Abschnitt ein Paar von Fingern (37) umfaßt, die dazwischen eine Vertiefung (39) zur Aufnahme eines stehenden Abschnittes (21) des Halterungsständers (30) umgrenzen.

4. Fahrzeug nach einem beliebigen der Ansprüche 1 bis 3, bei dem jede Montagebefestigungseinrichtung (12) ein geneigtes Rohr (13) umfaßt, das am rückwärtigen Ende (11) des Chassis (10) befestigt ist und ein Loch (14) für einen Stift (15) aufweist, wobei jeder stehende Abschnitt (21) des Halterungsständers (20) ein Loch (22) für den Stift im unteren Ende aufweist, und der Stift durch diese Löcher (14, 22) zur sicheren Befestigung des Halterungsständers (20) am Chassis (10) einfügbar ist.

**Revendications**

1. Véhicule (1) de coupe d'herbe, ayant un châssis (10) comportant un dispositif de support d'un récipient à herbe, comprenant un premier support (12) de montage placé à l'extrémité arrière (11) du châssis (10), un montant (20) de support destiné à être raccordé temporairement au support (12) de montage sur le châssis, deux équerres (25) de support, espacées latéralement et montées sur le montant de support (20), chaque équerre (25) ayant une plaque sensiblement plane comportant une languette centrale (26) qui dépasse vers le haut et deux gradins (27) placés de part et d'autre de la languette centrale (26), et deux récipients (30) d'herbe ayant chacun un organe d'accrochage (35) destiné à coopérer avec l'équerre (25) de support placée sur le montant (20), caractérisé en ce que le dispositif de support comporte un support supplémentaire (12) espacé latéralement par rapport au premier support de montage (12), et le montant (20) de support a sensiblement une forme en U retourné ayant deux parties verticales (21) et une traverse (23) reliant les parties verticales (21), chaque partie verticale (21) ayant une extrémité inférieure destinée à être raccordée temporairement à un support correspondant de montage (12), chaque organe d'accrochage (35) étant disposé sur une partie centrale avant du récipient (30) d'herbe.

2. Véhicule selon la revendication 1, dans lequel chaque récipient (30) d'herbe comporte un sac ayant un châssis rectangulaire (31) à son extrémité supérieure, et l'organe d'accrochage (35) est fixé à une partie centrale, en direction latérale, d'une partie latérale avant du châssis (31).

3. Véhicule selon la revendication 1 ou 2, dans lequel le montant (20) de support a des épaulements (24) aux extrémités supérieures des parties verticales (21), les équerres de support (25) sont montées aux surfaces latérales avant des épaulements (24) du montant (20) de support, la languette centrale (26) et les gradins (27) des équerres de support (25) dépassent vers le haut, au-delà de l'épaulement associé (24) du montant (20), et chaque organe d'accrochage (35) comporte une plaque sensiblement plane ayant, à son extrémité supérieure, deux parties d'accrochage (36) destinées à coopérer avec les gradins (27) de l'équerre de support (25), une cavité centrale (28) destinée à loger la languette centrale (26) de chaque équerre de support (25) et, à sa partie inférieure, deux doigts (37) délimitant entre eux une cavité (39) destinée à loger la partie verticale (21) du montant (20) de support.

4. Véhicule selon l'une quelconque des revendications 1 à 3, dans lequel chaque support de montage (12) comporte un tube incliné (13) fixé à l'extrémité arrière (11) du châssis (10) et ayant un trou (14) de passage d'une goupille (15), chaque partie verticale (21) du montant (20) a un trou (22) de passage de la goupille à son extrémité inférieure, et la goupille peut pénétrer dans ces trous (14, 22) afin qu'elle fixe le montant (20) sur le châssis (10).

FIG. 1

# FIG. 2

# FIG.3

0 144 227

# FIG. 4

# FIG.5

# FIG.6